# EUROPEAN PATENT SPECIFICATION

(11) **EP 2 819 515 B1**
(45) Date of publication and mention of the grant of the patent: **06.09.2017**
(21) Application number: 13701433.8
(22) Date of filing: 23.01.2013
(51) Int. Cl.: A01N 25/28, A01P 11/00, A01N 37/46, A01N 63/02, A01N 25/00

(54) **RODENTICIDAL COMPOSITION COMPRISING ANTIBODIES ENCAPSULATED IN NANOPARTICLES**
RODENTIZIDE ZUSAMMENSETZUNG ENTHALTEND IN NANOPARTIKELN VERKAPSELTE ANTIKÖRPER
COMPOSITION RODENTICIDE COMPRENANT DES ANTICORPS ENCAPSULÉS DANS DES NANOPARTICULES

(30) Priority: 28.02.2012 IT BO20120094
(43) Date of publication of application: 07.01.2015
(73) Proprietor: Dolo, Vincenza, 91019 Valderice (IT)
(72) Inventor: Dolo, Vincenza, 91019 Valderice (IT)
(74) Representative: Modiano, Micaela Nadia
(86) International application number: PCT/EP2013/051257
(87) International publication number: WO 2013/127568

(56) References cited:
- WO-A1-01/58955
- WO-A1-2010/081805
- WO-A2-2006/095128
- WO-A2-2008/149215
- Richard T Timmer ET AL: "Localization of the urea transporter UT-B protein in human and rat erythrocytes and tissues", Am J Physiol Cell Physiol, 1 January 2001 (2001-01-01), pages C1318-C1325, XP055037630, Retrieved from the Internet: URL:http://ajpcell.physiology.org/content/ 281/4/C1318.full.pdf#page=1&view=FitH [retrieved on 2012-09-10]
- C. J. ENDRES ET AL: "The Role of Nucleoside Transporters in the Erythrocyte Disposition and Oral Absorption of Ribavirin in the Wild-Type and Equilibrative Nucleoside Transporter 1(-/-) Mice", JOURNAL OF PHARMACOLOGY AND EXPERIMENTAL THERAPEUTICS, vol. 331, no. 1, 14 July 2009 (2009-07-14) , pages 287-296, XP055037642, ISSN: 0022-3565, DOI: 10.1124/jpet.109.153130
- "Encapsula NanoSciences", , 6 January 2009 (2009-01-06), pages 1-4, XP055037660, Nashville, TN, U.S.A. Retrieved from the Internet: URL:http://web.archive.org/web/20090106113 928/http://www.encapsula.com/company.html [retrieved on 2012-09-10]
- SUSANA MARTINS ET AL: "Lipid-based colloidal carriers for peptide and protein delivery - liposomes versus lipid nanoparticles", INTERNATIONAL JOURNAL OF NANOMEDICINE, vol. 2, no. 4, 1 December 2007 (2007-12-01), pages 595-607, XP055037661,
- J P WONG ET AL: "Enhanced protection against respiratory influenza A infection in mice by liposome-encapsulated antibody", IMMUNOLOGY, vol. 81, 1 January 1994 (1994-01-01), pages 280-284, XP055037649,
- MA J ET AL: "USE OF ENCAPSULATED SINGLE CHAIN ANTIBODIES FOR INDUCTION OF ANTI-IDIOTYPIC HUMORAL AND CELLULAR IMMUNE RESPONSES", JOURNAL OF PHARMACEUTICAL SCIENCES, AMERICAN PHARMACEUTICAL ASSOCIATION, WASHINGTON, US, vol. 87, no. 11, 1 November 1999 (1999-11-01), pages 1375-1378, XP000877492, ISSN: 0022-3549, DOI: 10.1021/JS9800681
- NAKANO Y ET AL: "New rat model induced by anti-glomerular basement membrane antibody shows severe glomerular adhesion in early stage and quickly progresses to end-stage renal failure", PATHOLOGY INTERNATIONAL,, vol. 58, 1 June 2008 (2008-06-01), pages 361-370, XP002571541, DOI: 10.1111/J.1440-1827.2008.02237.X
- FOSSATI-JIMACK L ET AL: "High Pathogenic Potential of Low-Affinity Autoantibodies in Experimental Autoimmune Hemolytic Anemia", THE JOURNAL OF EXPERIMENTAL MEDICINE, ROCKEFELLER UNIVERSITY PRESS, US, vol. 191, no. 8, 17 April 2000 (2000-04-17), pages 1293-1302, XP002571479, ISSN: 0022-1007
- MULLER R H ET AL: "Solid lipid nanoparticles (SLN) for controlled drug delivery - a review of the state of the art", EUROPEAN JOURNAL OF PHARMACEUTICS AND BIOPHARMACEUTICS, ELSEVIER SCIENCE PUBLISHERS B.V., AMSTERDAM, NL, vol. 50, no. 1, 3 July 2000 (2000-07-03), pages 161-177, XP004257186, ISSN: 0939-6411, DOI: 10.1016/S0939-6411(00)00087-4

## Description

The present invention relates to a biocidal composition formulated so as to be effective on at least one animal pest and to its use as an active component of a food bait directed against at least one animal pest.

Numerous unwelcome animal species can populate, occasionally or habitually, regions inhabited or frequented by humans, with serious risks to their health. These animal pests, such as for example mice, rats and pigeons, in fact, are often carriers of diseases and parasites that can be transmitted to human beings by direct contact with them or with their organic products (feces, blood, saliva, for example).

Disinfestation campaigns, aimed at eliminating or at least reducing the presence of these animals, are periodically necessary.

Among the species that humans most want to keep away from themselves are rodents, such as mice and rats. Currently, the most common rodenticides are based on substances capable of both interfering with the mechanism of blood coagulation, preventing the synthesis of coagulation factors, and of damaging capillaries, increasing their permeability and causing internal hemorrhages. They are administrated to mice and rats through food, by means of food baits, and they are effective after a highly variable period of time, which ranges from a single ingestion of rodenticide to the continuous consumption for several days until the lethal dose accumulates, depending on the type of poison used.

Although effective, rodenticides based on this mechanism of action are not species-specific but perform the same mechanism on any animal species. This is a danger for any domestic animals or pets (dogs, cats, etcetera) that may ingest accidentally the bait intended for the rodents and, potentially, also for humans. Moreover, it is presumed that the bleeding induced by rodenticides causes suffering to animals. Finally, there can be the risk of "secondary poisoning" if other animals eat the carcasses of poisoned mice or rats.

WO 2010/081805 A1 describes an orally administered biocide comprising liposomes containing at least one species-specific antibodies of at least one animal pest: the antibodies are directed against a molecule of the animal pest which is essential for performing a vital function.

In Martins S. et al. "Lipid based colloidal carriers for peptide and protein delivery - liposomes versus lipid nanoparticles ", International Journal of nanomedicine, vol. 2, n. 4, 1 December 2007, pages 595-607, a series of lipid-based colloidal carriers (among which are liposomes, solid lipid nanoparticles and nanostructured lipid carriers) are disclosed, which are suitable for oral delivery of peptide and proteins. Muller R.H. et al. "Solid lipid nanoparticles (SLN) for controlled drug delivery - a review of the state of the art", European Journal of Pharmaceutics and Biopharmaceutics, Elsevier Science Publishers B.V, vol. 50, n. 1, 3 July 2000, pages 161-177 discloses various methods for preparing solid lipid nanoparticles and for the analytical characterization thereof. Muller et al. also describes the oral administration of such solid lipid nanoparticles in various pharmaceutical forms as dispersions, tablets, pellets, capsules, powders.

The aim of the present invention is, therefore, to provide a new biocidal composition capable of obviating the disadvantages of currently known substances used as poisons for eliminating animal pests.

Within the scope of this aim, an object of the invention is to provide a biocidal composition capable of performing an effective action of selective disinfestation against at least one animal pest.

Another object of the invention is to provide a biocidal composition that is lethal for one or more animal pests and at the same time is harmless for other animals that might be exposed to it.

This aim and these and other objects that will become more apparent hereinafter are achieved by an orally administered biocidal composition that is selective for at least one animal pest, comprising solid lipid nanoparticles (SLN) containing at least one species-specific antibody (or synthetic polypeptide analogs thereof) of the at least one animal pest, said at least one species-specific antibody (or synthetic polypeptide analogs thereof) being directed against a biological molecule of the animal pest that is essential for performing a vital function of the at least one animal pest.

The aim and the objects of the invention are also achieved by the use of the biocidal composition described herein as an active component in a food bait for disinfestation from at least one animal pest.

Further objects, characteristics and advantages of the invention will become more apparent from the detailed description that follows.

A first aspect of the invention refers to a biocidal composition that is selective for at least one animal pest, comprising solid lipid nanoparticles (SLN) containing at least one species-specific antibody (or synthetic polypeptide analogs thereof) for at least one animal pest and directed against a molecule involved in a vital biological function of the animal.

In the context of the present invention, the expression "solid lipid nanoparticles" (or SLNs) designates solid micellar systems having spherical shape with a diameter comprised between 300 and 800 nm and consisting of fatty acids (particularly stearic acid). These SLNs are prepared by the coacervation technique, which excludes the use of solvents. The absence of solvents in the preparation process of the SLNs is of essential importance for the present invention because it allows the protein structures inserted in the SLNs (antibodies or synthetic polypeptide analogs thereof) not to be degraded or damaged. The SLNs have higher stability and better efficiency of absorption of both lipophilic and hydrophilic active ingredients (in the form of ion pairs) than other lipid structures such as liposomes. The preparation of SLNs is described in the Italian Patent Application TO2007A004111 in the name of Università degli Studi di Torino, filed in June 2007, extended as PCT Application WO2008/149215, and entitled "Method for the preparation of solid lipid micro and nanoparticles".

SLNs are known for pharmaceutical use (as carriers for active molecules) only as regards the incorporation of small size molecules, such as for example insulin, antibiotics and vitamins. In fact, incorporating large molecules such as antibodies (the indicative mass of which is approximately 150 kDa) causes various problems. First of all, there is an inherent technical difficulty in the very inclusion of a molecule of considerable size (approximately 150 kDa, as mentioned) in a spherical structure with a diameter of few hundred nanometers. Moreover, even if this operation is carried out successfully, there is a high probability that the antibody will be damaged in its structure during this incorporation process, consequently losing its functionality.

The inventors of the present application, for the first time, have instead been able to insert antibodies, i.e., hydrophilic and large (150 kDa) molecules, into a solid lipid nanoparticle so that they are not structurally damaged in any way. In fact, the inventors have verified by SDS-PAGE electrophoresis that antibodies were intact in their molecular structure after insertion in a solid lipid nanoparticle, maintaining the same molecular weight of 150 kDa assessed before undertaking the operation of insertion in the SLN.

Immunoglobulins are proteins of the immune system, produced by B lymphocytes, whose biological role is to identify foreign organisms, such as viruses, bacteria and other pathogens, by bonding to protein or glycoprotein structures that belong to them (antigens). Immunoglobulins are normally present on the surface of B lymphocytes; when a surface immunoglobulin comes into contact with an antigen, the B lymphocyte, thus stimulated, starts to produce rapidly a large number of immunoglobulins, which are secreted and accumulate in blood and in tissue fluids, where they perform their function of defense against pathogens. The secreted immunoglobulins are called antibodies.

The ability of immunoglobulins to recognize numerous molecules that are foreign to the body depends on certain protein domains known as hypervariability domains, encoded by portions of the genome that can recombine in a very different manner, giving rise to structures that have high affinity for a series of different antigens.

The *in vivo* administration of antibodies (or synthetic polypeptide analogues thereof) directed specifically against a target molecule of the body causes antibody precipitation, i.e., the formation of immune complexes in blood and tissue liquids. The target molecules are thus sequestered by the antibodies and are not available to perform their biological function. If the target molecules of the antibodies are molecules essential for an activity of the body, this activity can be compromised in such a way by the bond with the antibodies to cause the animal's death.

The specificity of the biocidal composition is determined by the specificity of the antibodies (or synthetic polypeptide analogues thereof) contained in it.

Besides the hypervariability region that recognizes the antigens, immunoglobulins have a region with a high degree of conservation, in terms of amino acid sequence, inside each species: this region is called Fc region (*Fragment, crystallisable*).

On the membrane of the cells that form the intestinal wall of animals there are receptors that recognize and identify the Fc region of immunoglobulins: once these receptors have bonded the immunoglobulins, they facilitate their internalization inside the cells and their consequent introduction into the blood flow. This mechanism is of fundamental importance for newborns, whose immature immune system does not produce antibodies, who can thus assimilate through the milk the antibodies produced by the mother.

Because of the amino acid conservation of this region, the intestinal receptors of a given animal species are capable of recognizing and internalizing only the immunoglobulins produced by that same animal species, which therefore have the Fc region that is characteristic of the species in question. These antibodies are therefore defined as species-specific, because they perform their action exclusively on one animal species, namely the one whose intestinal receptors are capable of bonding to, whereas they have no effect on other species.

In a preferred embodiment of the composition of the invention, the at least one species-specific antibody (or synthetic polypeptides analogues thereof) of the at least one animal pest is characterized in that it has the Fc region recognized selectively by the receptors present on the membrane of the cells of the intestinal wall of the at least one animal pest.

The selectivity in terms of molecular recognition between the Fc region of the antibodies and the membrane receptors at the intestinal level allows the biocidal composition according to the invention to be effective only on the one or more animal species for which it has been developed.

In this manner, even if harmless animals or domestic animals ingested the biocidal composition, it would have no harmful effect on their body, because the species-specific antibodies contained therein would not be assimilated by the intestine of these animals, since these animals lack the specific receptors for the recognition of antibodies that belong to a foreign species. This mechanism also avoids the risk of "secondary poisoning" of animals that eat the carcasses of animals died following the treatment with the biocidal composition of the invention.

As mentioned previously, the species-specificity of the antibodies of the present biocidal composition is associated with the high degree of amino acid conservation of the Fc fragment of the antibodies within each individual animal species. The amino acid sequences of the Fc fragments of the antibodies of many animal species have long been known and are available in the public and free database that can be accessed via the website http://www.imgt.org.

The species-specific antibodies of the present composition are ingested orally by animals and can reach intact the intestinal lumen, where their absorption occurs, thanks to their insertion into the solid lipid nanoparticles (SLN) or other lipid nanocapsules.

As already described previously, solid lipid nanoparticles are spherical micelles constituted by lipids. They are capable of acting as vehicles for the transport of various molecules (such as antibodies or drugs) inside the body. The transported molecules can be located inside the cavity of the solid lipid nanoparticle (SLN), in an aqueous environment (in the case of water-soluble molecules) or they can be inserted among the apolar tails of the lipid (in the case of non-water-soluble molecules).

The use of solid lipid nanoparticles (SLN) as carriers for the administration of drugs or other molecules allows these drugs or molecules to pass beyond the gastric region without undergoing degradation by the acids and enzymes produced by the stomach, thus allowing these molecules to be ingested orally. SLNs are degraded, once they have reached the intestine, by enzymes capable of dissolving fats, releasing the molecules contained therein, which are therefore assimilated at the intestinal level and enter the bloodstream quickly.

The inventors have performed preliminary *in vitro* tests on an ileum loop isolated from a rat in order to verify the capacity of the antibodies (conveniently marked so as to emit a fluorescent signal) to actually pass through the intestinal wall, thus reaching the bloodstream. In particular, an unstained observation in confocal microscopy of the iliac tissue was performed, from the internal surface of the intestinal wall in depth, acquiring 19 images at 20x, zoom 3x. The results obtained show that a fluorescent signal (indicative of the location of the tested antibody) can be detected up to a depth of approximately 14 microns from the intestinal surface. These data confirm, therefore, the capacity of the antibodies to pass into the intestinal wall. Similar tests performed on tissue isolated from rat colon have proven that a partial absorption of the antibodies occurs also at the level of colon, although the fluorescent signal thus obtained was less defined than the observation performed on the ileum.

Advantageously, in the composition according to the invention the species-specific antibodies directed against the essential biological molecules of the animal or animals that one wishes to neutralize are inserted in the solid lipid nanoparticles (SLN) and administered to the animal or animals orally: the solid lipid nanoparticles (SLN) ensure that the antibodies are carried to the intestinal level, where absorption occurs.

In order to verify the intestinal absorption and the consequent passage of the antibodies into the bloodstream, following the degradation of the solid lipid nanoparticles (SLN) in the intestinal lumen, preliminary experiments have been performed on rats according to the method described hereinafter.

Solid lipid nanoparticles (SLN, 1 ml) were prepared which contained rat antibodies (500 micrograms) against an antigen (*Trypanosoma Equiperdum*) that usually is not present in rat serum. The rats were subjected to *gavage* for the administration of 1 ml of suspension of solid lipid nanoparticles (SLN) containing the anti-*T*. *Equiperdum* antibodies. A series of serum collections from these rats was then performed at different times after administration (30 minutes; 1 hour; 2 hours; 4 hours; 8 hours; 12 hours; 24 hours; 48 hours). The collected serum was analyzed by means of two different biochemical methods: ELISA (Enzyme-Linked ImmunoSorbent Assay) and Western Blot. Both of these analytic techniques proved the presence of the anti-*T*. *Equiperdum* antibodies at the hematic level, thus confirming intestinal absorption of the antibodies.

The animal pest or pests that eat food containing the solid lipid nanoparticles (SLN) inside which there are species-specific antibodies directed against molecules having a vital function die within few days (generally 2 or 3).

In a preferred embodiment of the invention, the biocidal composition can comprise a series of different species-specific antibodies or synthetic polypeptide analogs thereof directed against one or more animal pests: i.e., antibodies directed against more than one type of target molecules can be present. The biocidal composition provided according to this embodiment acts, therefore, by damaging simultaneously more than one physiological function of the animal pest or pests.

In another preferred application of the invention, the species-specific antibodies for at least one animal pest or synthetic polypeptide analogs thereof used in the biocidal composition of the invention can be directed against a biological molecule whose function is essential, selected from the group consisting of molecules of the glomerular basal membrane and molecules of red blood cells.

In particular, the antibodies that recognize molecules of the glomerular basal membrane cause acute renal failure. Acute renal failure is a clinical syndrome characterized by a significant reduction of glomerular filtration for hours or days and causes a condition of oliguria or anuria. Renal failure and its complications (such as for example hypervolemia, metabolic acidosis, hyperkalemia, uremia, hemorrhagic diathesis) bring the mortality rate to 100%. It must be noted, however, that the development of acute renal failure syndrome is painless.

The antibodies that recognize proteins belonging to red blood cells cause instead a hemolytic effect, causing the destruction of these cells by the immune system.

In a preferred application of the invention, the biocidal composition contains antibodies or synthetic polypeptide analogs thereof directed against molecules that have an essential physiological function that belong to rodents. Preferably, the invention relates to a biocidal composition containing antibodies or synthetic polypeptide analogs thereof directed against molecules of fundamental physiological importance produced by mice or rats.

For example, it is possible to use antibodies directed against the glomerular basal membrane of rats (IgG Rat anti-MBG, for glomerulonephritis) or directed against molecules of red blood cells of rats (IgG rat anti-Rat, hemolytic antibodies).

Therefore, in a preferred embodiment of the present invention, the animal pest can be a rodent, preferably selected from the group consisting of mice and rats.

In the context of the present invention, the species-specific antibodies of the animal pest or pests can be prepared according to the procedures commonly used in the immunological field and known to the person skilled in the art.

A further application of the invention relates to the use of the biocidal composition of the present invention as an active component in a food bait for disinfestation from one or more animal pests.

From the description, it is therefore evident that the biocidal composition according to the invention ensures numerous advantages over known and currently used poisons. The main advantage is its absolute selectivity for one or more animal pest species, being thus completely harmless for any domestic animals that might come into contact with it. Moreover, it does not cause suffering to the animals that ingest it and is entirely devoid of a potential "secondary poisoning" effect.

## Claims

1. An orally administered biocidal composition selective for at least one animal pest, comprising solid lipid nanoparticles containing at least one species-specific antibody or synthetic polypeptide analogs thereof of the at least one animal pest, said at least one species-specific antibody or synthetic polypeptide analogs thereof being directed against a biological molecule of the animal pest which is essential for performing a vital function of the at least one animal pest.

2. The composition according to claim 1, wherein the at least one species-specific antibody of the at least one animal pest is **characterized in that** its Fc region is recognized selectively by the receptors present on the membrane of the cells of the intestinal wall of the at least one animal pest.

3. The composition according to claim 1 or 2, further comprising a plurality of species-specific antibodies or synthetic polypeptide analogs thereof of the at least one animal pest, each of said antibodies or synthetic polypeptide analogs thereof being directed against a distinct biological molecule of the animal pest which is essential for performing a vital function of the at least one animal pest.

4. The composition according to one or more of the preceding claims, wherein the biological molecule of the animal pest which is essential for performing a vital function is selected from the group consisting of molecules of the glomerular basal membrane and molecules of red blood cells.

5. The composition according to one or more of the preceding claims, wherein the animal pest is a rodent.

6. The composition according to claim 5, wherein the rodent is selected from the group consisting of mouse and rat.

7. Use of the biocide according to one or more of claims 1-6 as an active component in a food bait for disinfestation from at least one animal pest.

## Patentansprüche

1. Eine oral verabreichte Biozid-Zusammensetzung, selektiv für mindestens einen tierischen Schädling, die feste Lipid-Nanopartikel umfasst, welche mindestens einen artspezifischen Antikörper oder synthetische Polypeptid-Analoge davon des mindestens einen tierischen Schädlings enthalten, wobei der mindestens eine artspezifische Antikörper oder die synthetischen Poypeptid-Analoge davon gegen ein biologisches Molekül des tierischen Schädlings gerichtet sind, das essentiell für die Ausführung einer lebenswichtigen Funktion des mindestens einen tierischen Schädlings ist.

2. Die Zusammensetzung gemäß Anspruch 1, worin der mindestens eine artspezifische Antikörper des mindestens einen tierischen Schädlings **dadurch gekennzeichnet ist, dass** seine Fc-Region selektiv von den Rezeptoren erkannt wird, die an der Membran der Zellen der Darmwand des mindestens einen tierischen Schädlings vorhanden sind.

3. Die Zusammensetzung gemäß Anspruch 1 oder 2, die weiter eine Vielzahl artspezifischer Antikörper oder synthetischer Polypeptid-Analoge davon des mindestens einen tierischen Schädlings umfasst, wobei jeder der Antikörper oder synthetischen Polypeptid-Analoge davon gegen ein bestimmtes biologisches Molekül des tierischen Schädlings gerichtet ist, das essentiell für die Ausführung einer lebenswichtigen Funktion des mindestens einen tierischen Schädlings ist.

4. Die Zusammensetzung gemäß einem oder mehreren der obigen Ansprüche, worin das biologische Molekül des tierischen Schädlings, das essentiell für die Ausführung einer lebenswichtigen Funktion ist, gewählt ist aus der Gruppe, die aus Molekülen der glomerulären basalen Membran und Molekülen roter Blutkörperchen besteht.

5. Die Zusammensetzung gemäß einem oder mehreren der obigen Ansprüche, worin der tierische Schädling ein Nagetier ist.

6. Die Zusammensetzung gemäß Anspruch 5, worin das Nagetier gewählt ist aus der Gruppe, die aus Maus und Ratte besteht.

7. Verwendung des Biozids gemäß einem oder mehreren der Ansprüche 1-6 als Wirkstoff in einem Lebensmittelköder zur Entwesung von mindestens einem tierischen Schädling.

## Revendications

1. Composition biocide administrée par voie orale, sélective vis-à-vis d'au moins un animal nuisible, comprenant des nanoparticules lipidiques solides contenant au moins un anticorps spécifique de l'espèce dudit animal nuisible au nombre d'au moins un, ou des analogues polypeptidiques synthétiques d'un tel anticorps, lequel anticorps spécifique de l'espèce, ou lesquels analogues polypeptidiques synthétiques d'un tel anticorps, est ou sont dirigé(s) contre une molécule biologique de l'animal nuisible qui est essentielle pour l'exercice d'une fonction vitale de l'animal nuisible au nombre d'au moins un.

2. Composition conforme à la revendication 1, dans laquelle l'anticorps, au nombre d'au moins un, spécifique de l'espèce de l'animal nuisible au nombre d'au moins un est **caractérisé en ce que** sa région Fc est reconnue sélectivement par les récepteurs présents sur la membrane des cellules de la paroi intestinale de l'animal nuisible au nombre d'au moins un.

3. Composition conforme à la revendication 1 ou 2, comprenant en outre plusieurs anticorps spécifiques de l'espèce dudit animal nuisible au nombre d'au moins un, ou des analogues polypeptidiques synthétiques de tels anticorps, chacun de ces anticorps ou analogues polypeptidiques synthétiques de tels anticorps étant dirigé contre une molécule biologique distincte de l'animal nuisible qui est essentielle pour l'exercice d'une fonction vitale de l'animal nuisible au nombre d'au moins un.

4. Composition conforme à l'une ou plusieurs des revendications précédentes, pour laquelle la molécule biologique de l'animal nuisible qui est essentielle pour l'exercice d'une fonction vitale est choisie dans l'ensemble formé par les molécules de la membrane basale glomérulaire et les molécules des globules rouges du sang.

5. Composition conforme à l'une ou plusieurs des revendications précédentes, pour laquelle l'animal nuisible est un rongeur.

6. Composition conforme à la revendication 5, pour laquelle le rongeur est choisi dans l'ensemble formé par les souris et les rats.

7. Utilisation d'un biocide conforme à l'une ou plusieurs des revendications 1 à 6, en tant que composant actif dans de la nourriture appât pour désinfestation d'au moins un animal nuisible.
